# EUROPÄISCHE PATENTSCHRIFT

(11) **EP 2 559 221 B1**
(45) Veröffentlichungstag und Bekanntmachung des Hinweises auf die Patenterteilung: **01.04.2015**
(21) Anmeldenummer: 11717563.8
(22) Anmeldetag: 26.04.2011
(51) Int. Cl.: H04L 29/08, H04L 29/06, G05B 19/418

(54) **VERFAHREN UND VORRICHTUNG ZUM AUSTAUSCH VON DATEN SOWIE NETZWERK**
METHOD AND APPARATUS FOR INTERCHANGING DATA, AND NETWORK
PROCÉDÉ ET DISPOSITIF D'ÉCHANGE DE DONNÉES AINSI QUE RÉSEAU

(30) Priorität: 25.05.2010 DE 102010021472
(43) Veröffentlichungstag der Anmeldung: 20.02.2013
(73) Patentinhaber: Siemens Aktiengesellschaft, 80333 München (DE)
(72) Erfinder: DEIRETSBACHER, Karl-Heinz, 91090 Effeltrich (DE); ELSTERER, Stefan, 90762 Fürth (DE); HOCK, Christian, 90763 Fürth (DE); PESCHKE, Jörn, 90489 Nürnberg (DE); VOLKMANN, Frank, 90475 Nürnberg (DE)
(86) Internationale Anmeldenummer: PCT/EP2011/056559
(87) Internationale Veröffentlichungsnummer: WO 2011/147652

(56) Entgegenhaltungen:
- EP-A1- 1 916 578
- WO-A1-2007/105979
- CREVATIN M ET AL: "Security for Industrial Communication Systems", PROCEEDINGS OF THE IEEE, IEEE. NEW YORK, US, Bd. 93, Nr. 6, 1. Juni 2005 (2005-06-01), Seiten 1152-1177, XP011133109, ISSN: 0018-9219, DOI: DOI:10.1109/JPROC.2005.849714
- LEI XU: "Industry network QoS approach based on new Ethernet standards", COMPUTER SCIENCE&EDUCATION, 2009. ICCSE '09. 4TH INTERNATIONAL CONFERENCE ON, IEEE, PISCATAWAY, NJ, USA, 25. Juli 2009 (2009-07-25), Seiten 395-398, XP031523658, ISBN: 978-1-4244-3520-3

## Beschreibung

Die Erfindung betrifft ein Verfahren zum Austausch von Daten zwischen zwei Geräten eines Netzwerks, welches sich zum Austausch der Daten eines Kommunikationsprotokolls mit einer Schnittstelle nach dem OPC-UA Standard bedient. Die Erfindung betrifft auch eine Vorrichtung zum Austausch von Daten zwischen zwei Geräten sowie ein Netzwerk mit zumindest zwei Geräten und einer solchen Vorrichtung.

Crevatin, M. et al, "Security of Industrial Communication Systems" Proceedings of the IEEE, Bd. 93, Nr. 6, 1. Juni 2005, Seiten 1152-1177, beschreibt ein Verfahren zum Austausch von Daten zwischen zwei Geräten eines Netzwerkes, welches sich zum Austausch der Daten eines Kommunikationsprotokolls mit einer Schnittstelle nach dem OPC-Standard bedient. Unabhängig davon erwähnt die Druckschrift D1 die Verwendung von IEEE802.IQ VLAN und Prioritätsschematas, um mit einer sehr niedrigen Zeitverzögerung für zeitkritische Anwendungen eine schnelle Übertragung von Daten zu ermöglichen, indem IP-Schichten umgangen werden.

Die WO 2007/105979 A1 erwähnt im Zusammenhang einer Synchronisation eines Software-Agenten mit einem Systemzyklus in einem Automatisierungssystem eine OPC-UA (United Architecture) Schnittstelle, um zu Teilen eines Automatisierungssystems einen webbasierten Zugriff zu ermöglichen.

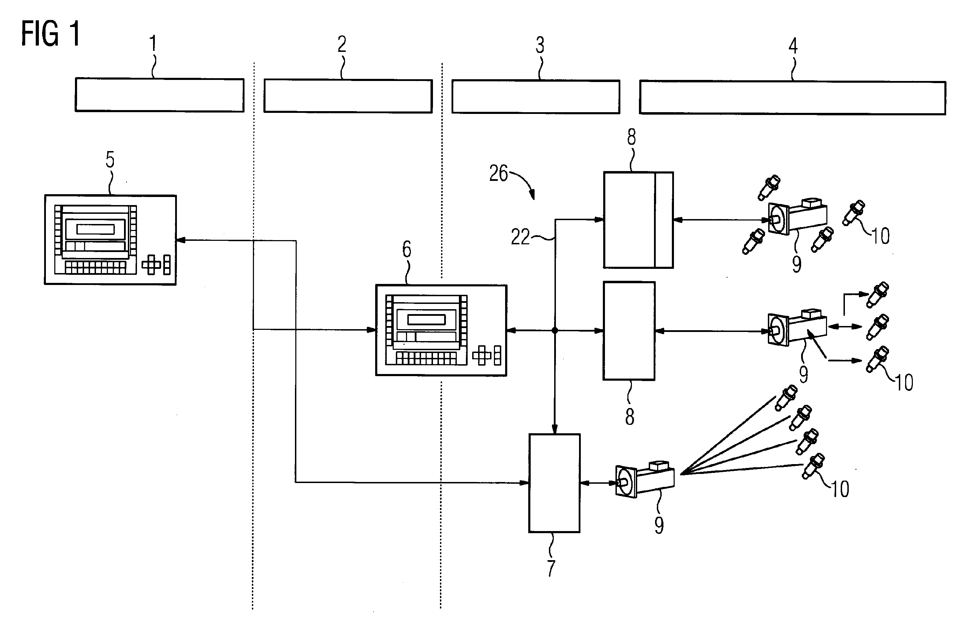

FIG 1 zeigt eine schematische Darstellung eines Automatisierungsnetzwerks. Auf der so genannten Feldebene einer automatisierungstechnischen Anlage befinden sich mehrere Geräte 8, die Daten von Sensoren 10 empfangen und geeignete Steuerdaten an Aktoren 9 ausgeben. Die Geräte 8 können hierbei als eigenständige Rechner mit den Sensoren 10 und Aktoren 9 in Wirkkontakt stehen, oder es kann sich bei den Geräten 8 um eingebettete Systeme handeln. Die Geräte 8 können insbesondere über ihre jeweils eigene steuerungstechnische Firmware verfügen. Daneben ist exemplarisch ein Rechner 7 dargestellt, welcher in der Steuerungsebene (SPS) vorliegt. Der Rechner 7 und die Geräte 8 werden zur Steuerung oder Regelung zugeordneter Maschinen einer Anlage eingesetzt. Innerhalb des automatisierungstechnischen Netzwerks liegen sie auf den Teilnetzen des so genannten Field Networks 4 bzw. Plant Floor Networks 3 vor.

Zwischen dem Plant Floor Network 3 und einem Automation Network 2 wird eine Verknüpfung über einen Rechner 6 mit einem Supervisory Control and Data Acquisition (SCADA) System gebildet. Der Rechner 6 ist damit Teil der Prozessleitebene, durch welche technische Prozesse im Plant Floor Network 3 bzw. Field Network 4 überwacht und gesteuert werden.

Auf einer übergeordneten Ebene des automatisierungstechnischen Netzwerks kann als Teil eines Enterprise Networks 1 ein Rechner 5 vorgesehen sein. Dieser kann ein Manufacturing Execution System (MES) enthalten und damit Teil der Betriebsleitebene sein. Alternativ kann vorgesehen sein, dass der Rechner 5 als Teil der Unternehmensebene mit einem Enteprise Resource Planning (ERP) System ausgerüstet ist. Dieses in der Büroebene eingesetzte ERP-System stellt eine komplexe Software zur Unterstützung der Ressourcenplanung eines Unternehmens bereit (z.B. SAP-System).

Für die Netzwerkskommunikation auf der Büroebene ist es üblich, nicht echtzeitfähige Sternsysteme einzusetzen. Als neuer Standard in der Netzwerkkommunikation hat sich hierbei zwischen dem SCADA-System des Rechners 6 und dem ERP-System des Rechners 5 das so genannte OPC Unified Architecture (OPC-UA) System gemäß den Spezifikationen der OPC Foundation etabliert. In der Datenkommunikation gemäß OPC-UA werden Daten (Werte) mit einer Qualität belegt, zu der auch die Rate gehört, mit der der Wert aktualisiert werden soll. Es werden nur solche Daten übertragen, die sich geändert haben, und deren Eigenschaften auslösen, dass der jeweilige Wert übertragen werden muss. OPC-UA bietet damit eine ereignisbasierte Kommunikation. OPC-UA basiert hierbei auf einem Remote Procedure Call (RPC) Mechanismus, wie er beispielsweise in Standard Ethernet, TCP/IP (Transmission Control Protocol / Internet Protocol) oder auch httpbasierten Netzen bekannt ist. Gemäß dem RPC-Mechanismus führt eine Anfrage eines Clients auf einem Server zum Aufruf einer Prozedur auf diesem Server, welche die Anfrage bearbeitet. Erst wenn die Bearbeitung der Anfrage abgeschlossen ist und vom Server eine Antwort an den Client gesendet wurde, kann dieser den Prozess fortsetzen, der durch die Anfrage unterbrochen wurde. Es handelt sich um die klassische Kommunikationsarchitektur der Interprozesskommunikation (Interprocess Communication, IPC) in verteilten Systemen. Nebenläufige Prozesse sind kausal voneinander abhängig.

OPC-UA kennt dagegen den Mechanismus der so genannten Subscriptions. Dabei abonniert ein Empfänger von einem Sender eine bestimmte Auswahl von Informationen bzw. Daten. Kommt es zu einer Änderung in dieser Informationsmenge bzw. Teildatenauswahl, so sendet der Sender diese Änderungen selbstständig an den Empfänger. Dieser Mechanismus ist parametrierbar, da zum Beispiel vorgegeben werden kann, in welchem Zeitabstand frühestens Änderungen gesendet werden sollen.

Mit OPC-UA steht der Industrie ein Standardprotokoll zur Verfügung, mit dessen Hilfe es möglich ist, unterschiedlichste Informationen (Alarme, Prozesswerte etc.) einerseits in einem Informationsmodell zu modellieren und andererseits auch zu transportieren. Hierzu gibt es die so genannten Service Sets und Services, welche die entsprechenden Funktionalitäten zur Verfügung stellen. Erstmals ist es mit OPC-UA möglich, diese komfortable Informationsübertragung auch im Embedded Sector zu verwenden. Dies macht OPC-UA zu einem mächtigen Werkzeug im Bereich der Informationsmodellierung.

Während OPC-UA heute hauptsächlich im Automation Network 2, zum Beispiel bei SCADA-Systemen, eingesetzt wird, sind an die Kommunikationsprotokolle im Plant Floor Network 3 bzw. Field Network 4 gänzlich andere Anforderungen zu stellen. In der Automatisierung ist es erforderlich, mehrere Geräte 8 über Kommunikationsstrecken hinweg zu synchronisieren. Die Anforderungen an diese Synchronisation sind sehr vielfältig. Sie reichen bis zu harten Echtzeitanforderungen, zum Beispiel bei der Synchronisation von Antriebsachsen einer Papierfabrik. Insbesondere im Plant Floor, wo die Feldebene auf die Büroebene trifft, werden häufig bereits Ethernet-TCP/IP-basierte Infrastrukturen eingesetzt, zum Beispiel zur Kommunikation zwischen Kopfsteuerungen und/oder SCADA/MES-Systemen.

In diesen Fällen ist es üblich, so genannte getaktete Protokolle einzusetzen. Das bedeutet, dass die Zeit in Zeitscheiben zerlegt wird und genau vorgeplant wird, welches Gerät wie und wie viel innerhalb eines Zeittakts senden darf. Es werden zyklische Prozessabbilder (Tabellen mit Input-Output-Werten) zwischen den Kommunikationspartnern ausgetauscht. Hierbei gilt die Regel: Je kürzer der Zyklus (höherer Takt), desto besser ist die Synchronisationsfähigkeit und desto mehr Daten müssen permanent übertragen werden. Eine Verdopplung der Taktrate führt zur Verdopplung des gesamten Kommunikationsaufkommens. In jedem Zyklus werden immer alle Daten gesendet, unabhängig davon, ob für alle Werte dieselben Zeitanforderungen gelten oder ob sich Werte geändert haben. Auf der Feldebene ist dieses Kommunikationsprinzip in der Automatisierungstechnik üblich, um die dort herrschenden harten Echtzeitanforderungen erfüllen zu können.

Im Bereich der dezentralen Peripherie kann Echtzeitkommunikation hierbei beispielsweise über das Kommunikationsprotokoll Profinet IO erfolgen. Es ermöglicht den Datenaustausch zwischen Ethernet-basierten Feldgeräten 8. Ein weiterer Ethernet-basierter Ansatz für die Automatisierungstechnik ist Industrial Real Time Ethernet (IRTE). Gemäß IRTE ist die Kommunikation auf dem Netzwerk vollständig vorgeplant, sodass unerwünschte Datenkollisionen ausgeschlossen werden. Dieses Modell ist jedoch sehr statisch, da es nicht ohne neue Planung auf Änderungen reagieren kann. Die Planung ist sehr komplex und kann nur mithilfe eines Tools erfolgen, da Zeitverläufe zum Beispiel durch Kabellängen ebenfalls mit berücksichtigt werden müssen. Mit IRTE werden primär Linienstrukturen geplant. Der Vorteil besteht darin, dass strenger Determinismus gegeben ist.

Damit sind die Büro- bzw. Leitebene und die Feldebene hinsichtlich der in ihren Teilnetzwerken verwendeten Kommunikationsprotokollen getrennt. Die jeweils eingesetzten Kommunikationsprotokolle genügen unterschiedlichen Anforderungen. Gegebenenfalls sind die Echtzeitanforderungen, die auf der Feldebene herrschen, für die Büroebene unerheblich. Unter dem Ausdruck "vertikale Integration der Automatisierungstechnik" versteht man das Bestreben, die verschiedenen Teilnetzwerke zu integrieren und eine einheitliche Kommunikationsstruktur von der Unternehmensebene bis hinab in die Feldebene zu schaffen.

Es ist Aufgabe der Erfindung, ein Verfahren, eine Vorrichtung sowie ein Netzwerk bereitzustellen, mit denen es möglich ist, eine verbesserte Integration von Teilnetzwerken zu erzielen.

Diese Aufgabe wird durch ein Verfahren, welches die Merkmale des Patentanspruchs 1 aufweist, eine Vorrichtung, welche die Merkmale des Patentanspruchs 6 aufweist, sowie ein Netzwerk mit den Merkmalen des Patentanspruchs 7 gelöst.

Das erfindungsgemäße Verfahren dient zum Austausch von Daten zwischen zwei Geräten eines Netzwerks, welches sich zum Austausch der Daten eines Kommunikationsprotokolls mit einer Schnittstelle nach dem OPC-UA Standard bedient. Hierbei umfasst das Kommunikationsprotokoll eine Schnittstelle nach dem Stream Reservation Protocol (SRP) Standard oder Multiple Stream Registration Protocol (MSRP) Standard gemäß IEEE 802.1Qat, sodass die Daten zwischen den zwei Geräten über beide Schnittstellen in einer vorgegebenen Zeitspanne austauschbar sind.

OPC-UA (Object Linking and Embedding for Process Control Unified Architecture) ist eine OPC Spezifikation der OPC Foundation und auf www.opcfoundation.org beschrieben. Das Stream Reservation Protocol (SRP) bzw. Multiple Stream Registration Protocol (MSRP) sind standardisierte Schnittstellen der Audio-Video-Bridging Task Group und charakterisieren das Streaming von Audio- und Videodaten über Netzwerke. Der Erfindung liegt die Überlegung zugrunde, OPC-UA mittels Audio-Video-Bridging (AVB) so zu modifizieren, dass die eigentlich nicht echtzeitfähige OPC-UA Kommunikation Echtzeiteigenschaften aufweist. Dadurch, dass die Daten zwischen den zwei Geräten über beide Schnittstellen in einer vorgegebenen Zeitspanne austauschbar sind, genügen sie insbesondere Echtzeitanforderungen bzw. den Anforderungen eines Echtzeitsystems. Was unter Echtzeit zu verstehen ist, ist insbesondere in DIN 44300 definiert. Insbesondere kann es sich um eine so genannte harte Echtzeit handeln. Insbesondere kann vorgesehen sein, dass die RPC-ähnliche Kommunikationsform von OPC-UA beibehalten wird, wobei jedoch der unterlagerte Transport auf AVB abgebildet wird. Insbesondere kann vorgesehen sein, dass eine Protokollschicht von OPC-UA durch die SRP/MSRP-Schnittstelle modifiziert und/oder ausgetauscht wird.

Durch die Kombination einer OPC-UA- und SRP/MSRP-Schnittstelle in einem Kommunikationsprotokoll wird echtzeitfähige Kommunikation ermöglicht, die selbst komplexen Anforderungen wie der Achssynchronisation gerecht wird. Das so realisierte Kommunikationsprotokoll lässt sich in Geräten der Feldebene einfach und unkompliziert implementieren. Zudem ist ein problemloser Datenaustausch mit OPC-UA-basierten Geräten höherliegender Ebenen, wie zum Beispiel des Automation Networks oder Enterprise Networks sichergestellt. Es wird ein hohes Maß an Interkompatibilität zwischen Teilnetzwerken einer automatisierungstechnischen Anlage erreicht und die vertikale Integration erheblich verbessert. Das Kommunikationsprotokoll zeichnet sich durch eine hohe Effizienz aus, da insbesondere aufgrund der OPC-UA Komponente überflüssiger Datenaustausch sicher vermieden wird. Gleichzeitig stellt die MSRP/SRP-Komponente die Echtzeitfunktionalität sicher.

Vorzugsweise ist das Kommunikationsprotokoll mehrschichtig aufgebaut, wobei jeder Schicht eine Schnittstelle zugeordnet ist, und wobei für eine erste Art von Daten eine Schichtfolge gemäß dem OPC-UA Standard durchlaufen wird und für eine zweite Art von Daten beim Durchlauf von der Schichtfolge gemäß dem OPC-UA Standard dergestalt abgewichen wird, dass die SRP- bzw. MSRP- Schnittstelle genutzt wird und die zweite Art von Daten zwischen den zwei Geräten in der vorgegebenen Zeitspanne ausgetauscht wird. Besonders bevorzugt ist es hierbei, wenn das Kommunikationsprotokoll nach dem Open Systems Interconnection Reference Model (OSI Schichtenmodell der internationalen Organisation für Normung) mehrschichtig aufgebaut ist. Bei den Daten der ersten Art kann es sich insbesondere um solche Daten handeln, die keinen Echtzeitanforderungen genügen müssen. Bei den Daten der zweiten Art kann es sich insbesondere um solche Daten handeln, die Echtzeitanforderungen genügen müssen. Diese Ausführungsform erlaubt es, dass nicht echtzeitkritische Daten die konventionelle OPC-UA Kommunikationsprotokoll-Architektur nutzen, während echtzeitrelevante Daten dergestalt vom aus dem Stand der Technik bekannten OPC-UA Protokoll abweichen, als dass sie die neu vorgesehene MSRP/SRP-Schnittstelle nutzen. Hierbei wird sowohl die Mächtigkeit von OPC-UA hinsichtlich des Datenaustausches als auch die Stärke von AVB hinsichtlich seiner Echtzeitcharakteristika gemäß der jeweiligen Datenart ideal genutzt.

Vorzugsweise umfasst das Kommunikationsprotokoll eine Applikationsschicht, eine OPC-UA Schnittstelle, eine TCP/IP-Schnittstelle, eine Ethernet-Schnittstelle und eine physikalische Schnittstelle. Diese werden für die erste Art von Daten durchlaufen, während für die zweite Art von Daten zumindest die TCP/IP-Schnittstelle umgangen wird. Unter Umgehen ist zu verstehen, dass die TCP/IP-Schnittstelle hinsichtlich der Verarbeitung von Daten nicht durchlaufen bzw. genutzt wird. Statt der TCP/IP-Schnittstelle wird vorzugsweise die SRP/MSRP-Schnittstelle durchlaufen. Es kann auch vorgesehen sein, dass eine der OPC-UA Schnittstelle nachgeordnete Unified Architecture Schicht für die Verarbeitung der Daten der zweiten Art geeignet modifiziert wird. Insbesondere kann vorgesehen sein, dass zumindest die Applikationsschicht und die physikalische Schnittstelle gegenüber dem OPC-UA Standard vollständig unverändert bleiben. Diese Ausführungsform erlaubt eine erhebliche Erweiterung des Funktionsumfangs eines auf OPC-UA basierenden Kommunikationsprotokolls bei gleichzeitig nur geringfügigen Änderungen innerhalb des dem Kommunikationsprotokoll zugrundeliegenden Schichtensystems. Die programmtechnische Umsetzung wird erleichtert. Der Schnittstellenzugriff gestaltet sich für einen Programmentwickler sehr einfach.

Vorzugsweise wird ein durch die SRP- bzw. MSRP-Schnittstelle bereitgestelltes Datenfenster in mehrere zeitlich aufeinanderfolgende Teildatenfenster untergliedert. Diese Ausführungsform erlaubt eine sehr gute Organisation der Übertragung von Daten zwischen den beiden Geräten. Die Flexibilität hinsichtlich der Befüllung der Datenfenster mit Daten verbessert sich. Zudem kann potenziell die Taktrate bei der Datenübertragung verbessert werden.

Besonders bevorzugt ist es, wenn die zweite Art von Daten in Teildatenfenstern übertragen wird, durch welche eine erste Teilmenge von Teildatenfenstern gebildet wird, und eine zweite Teilmenge von Teildatenfenstern, welche zur ersten Teilmenge disjunkt ist, für die Übertragung der ersten Art von Daten genutzt wird. Insbesondere können dann echtzeitkritische Daten in speziell hierfür vorgesehenen Teildatenfenstern übertragen werden, während verbleibende Teildatenfenster für die Übertragung nicht echtzeitkritischer Daten zur Verfügung stehen. Freie Ressourcen für die Datenübertragung können so sehr gut genutzt werden. Es besteht die Möglichkeit, große Datenmengen zu übertragen und dennoch Echtzeitfähigkeit zu gewährleisten.

Eine erfindungsgemäße Vorrichtung dient zum Austausch von Daten zwischen zwei Geräten eines Netzwerks, welche sich zum Austausch der Daten eines Kommunikationsprotokolls mit einer Schnittstelle nach dem OPC-UA Standard bedient. Das Kommunikationsprotokoll umfasst erfindungsgemäß eine Schnittstelle nach dem Stream Reservation Protocol (SRP) Standard oder Multiple Stream Registration Protocol (MSRP) Standard gemäß IEEE 802.1Qat, sodass die Daten zwischen den zwei Geräten über beide Schnittstellen in einer vorgegebenen Zeitspanne austauschbar sind.

Ein erfindungsgemäßes Netzwerk umfasst zumindest zwei Geräte sowie eine erfindungsgemäße Vorrichtung.

Die mit Bezug auf das erfindungsgemäße Verfahren dargestellten bevorzugten Ausführungsformen und deren Vorteile gelten entsprechend für die erfindungsgemäße Vorrichtung sowie das erfindungsgemäße Netzwerk.

Anhand von Ausführungsbeispielen wird die Erfindung im Folgenden näher erläutert. Es zeigen:
- FIG 1: eine schematische Darstellung eines mehrschichtigen Netzwerks einer automatisierungstechnischen Anlage;
- FIG 2: eine schematische Darstellung eines Datenaustauschs zwischen zwei Geräten eines Netzwerks, welcher durch ein Kommunikationsprotokoll gemäß einem Ausführungsbeispiel des erfindungsgemäßen Verfahrens geregelt wird; und
- FIG 3: eine schematische Darstellung der Untergliederung von Datenfenstern in einem AVB Stream in Teildatenfenster.

In den Figuren sind gleiche oder funktionsgleiche Elemente mit den gleichen Bezugszeichen versehen.

Die Erfindung erlaubt es, OPC-UA im Bereich der Echtzeitkommunikation (deterministische Kommunikation) einzusetzen. OPC-UA, das bisher hauptsächlich im Automation Network 2 (zum Beispiel im Rechner 6 mit dem SCADA-System) eingesetzt wurde, kann jetzt bis in das Plant Floor Network 3 bzw. Field Network 4 vordringen. Innerhalb der Automatisierungspyramide wird unter Einsatz des vorgeschlagenen Verfahrens der Anwendungsbereich von OPC-UA nach unten in der Pyramide erweitert. Da es Bestrebungen gibt, OPC-UA auch bis zum Rechner 5 mit dem ERP- bzw. MES-System im Enterprise Network 1 hin einzusetzen, erhält man folglich eine durchgängige Kommunikation und einheitliche Sicht auf die Prozessdaten von der untersten Ebene bis hin zur ERP-Ebene. Es wird dieselbe Technik durchgehend eingesetzt, was die vollständige Interoperabilität sicherstellt, ohne dass zusätzliche Hardware (Mapper oder Wandler) notwendig wären.

Eine Stärke von OPC-UA ist seine Mächtigkeit in der Informationsmodellierung, die gleichzeitig dazu verwendet wird, die Interoperabilität von Komponenten zu verbessern bzw. zu ermöglichen. Alle beteiligten Geräte 8 liefern nicht nur ihre Prozesswerte, sondern darüber hinaus im Informationsmodell auch semantische Information über diese Werte. Dieser Vorteil wirkt jetzt - ohne Mehraufwand - bis in das Plant Floor Network 3.

Eine Grundidee besteht darin, die RPC-ähnliche Kommunikationsform von OPC-UA beizubehalten und dabei den unterlagerten Transport auf AVB abzubilden. AVB stellt priorisierbare Datenströme (Streams) zur Verfügung, deren Bandbreite vorbestimmbar ist und deren Bandbreite dann auch garantiert wird. AVB dient im Stand der Technik der Übertragung von Audio- und Video-Streams. Hier besteht die Grundanforderung darin, viele Daten (Bildinformationen) zuverlässig und schnell zu übertragen. Würde AVB diese Grundanforderung nicht erfüllen, würde es so genannte Freezer und Ruckler im Bild geben. Diese Grundanforderung deckt sich jedoch genau mit den Echtzeitanforderungen in der Automatisierungstechnik. Eine Idee besteht deshalb darin, OPC-UA mittels AVB zu modifizieren und es auf diese Weise echtzeitfähig zu machen.

Hierbei werden typischerweise die Subscriptions (genauer: die Änderungsmeldungen einer Subscription) mittels der AVB-Technik transportiert, die ihrerseits eine geforderte Übertragungsqualität zusichert. Durch diese Kombination wird erreicht, dass eine echtzeitfähige Kommunikation auf Basis OPC-UA ermöglicht wird.

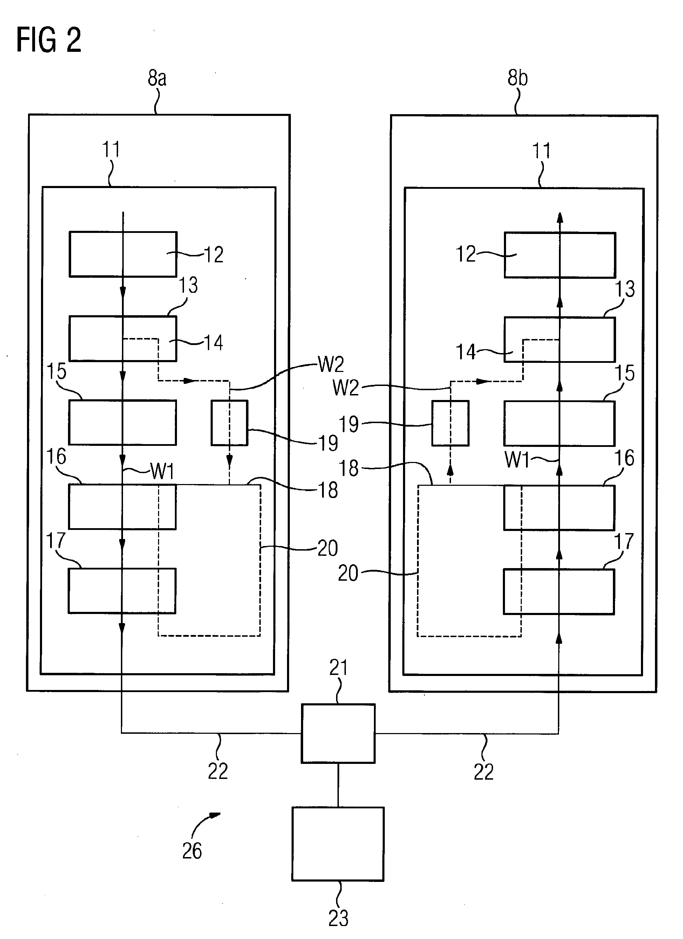

Das Kommunikationsprinzip zwischen zwei Geräten 8a und 8b ist beispielhaft in FIG 2 dargestellt. Beide Geräte 8a und 8b umfassen einen Rechner, in welchem das Kommunikationsprotokoll 11 ablauffähig installiert ist. Das Kommunikationsprotokoll 11 umfasst hierbei mehrere Schichten mit zugehörigen Schnittstellen. Im einzelnen sind dies eine Applikationsschicht 12, ein Unified Architecture (UA) Stack 14 mit einer OPC-UA Schnittstelle 13, eine TCP/IP-Schnittstelle 15, eine Ethernet-Schnittstelle 16 sowie eine physikalische Schnittstelle 17. Zudem ist nunmehr eine MSRP/SRP-Schnittstelle 18 vorgesehen, welche eine AVB-Funktionalität 20 bereitstellt. Parallel zum TCP/IP-Layer ist nunmehr ein Real Time Unified Architecture (RT-UA) Layer 19 vorgesehen.

Die beiden Geräte 8a und 8b sind über eine Datenleitung 22 und einen Switch oder Router 21 miteinander verbunden. Im Ausführungsbeispiel handelt es sich bei der Datenleitung 22 um ein Ethernet-Kupferkabel. Alternativ kann jedoch jede beliebige Art der Datenleitung 22 vorgesehen sein, die beispielsweise drahtgebunden, auf Glasfaser basierend oder auf Funk basierend (zum Beispiel WLAN) ausgebildet sein kann. Der Router 21 muss insbesondere so ausgebildet sein, dass er das Kommunikationsprotokoll 11 unterstützt. An den Router 21 ist ferner ein Rechner 23 angeschlossen. Ist auf dem Rechner 23 Programmcode ablauffähig installiert, welcher Kommunikation nach dem OPC-UA Standard ermöglicht, so kann dieser Rechner 23 problemlos mit den Geräten 8a und 8b kommunizieren. Im Rechner 23 müssen insbesondere keine Real Time Erweiterungen im Kommunikationsprotokoll 11 vorgesehen sein, um dennoch eine problemlose Kommunikation mit den Geräten 8a und 8b zu ermöglichen.

Das Gerät 8a tritt in Kommunikation mit dem Gerät 8b und übermittelt hierbei echtzeitkritische Daten sowie nicht echtzeitkritische Daten. Echtzeitkritische Daten betreffen beispielsweise Bewegungsabläufe von beweglichen Teilen des Geräts 8a. Beispielsweise darf das Gerät 8b erst dann einen spezifischen Bewegungsablauf ausführen, nachdem das Gerät 8a selbst einen Bewegungsablauf ausgeführt hat. Wird diese zeitliche Reihenfolge nicht eingehalten, so kollidieren die Geräte 8a und 8b miteinander. Dies gilt es zu vermeiden. Deshalb ist eine enge Zeitspanne vorgegeben, innerhalb derer der Austausch der echtzeitkritischen Daten zwischen den Geräten 8a und 8b erfolgen muss. Diese Daten werden im Kommunikationsprotokoll 11 gemäß dem gestrichelt eingezeichneten Weg W2 verarbeitet. Gemäß dem Weg W2 durchlaufen die Daten die einzelnen Schichten bzw. Schnittstellen des Kommunikationsprotokolls 11 dergestalt, dass die MSRP/SRP-Schnittstelle Anwendung findet. Die echtzeitrelevanten Daten werden dann über AV Streams transportiert und erfüllen so die Echtzeitanforderungen. Es wird also der RT-UA-Layer 19 durchlaufen. Selbiges ist im Kommunikationsprotokoll 11 des Geräts 8b der Fall.

Daneben tauschen die Geräte 8a und 8b jedoch auch nicht echtzeitkritische Daten aus. Beispielsweise teilt das Gerät 8a dem Gerät 8b regelmäßig seine Betriebstemperatur mit. Hierbei ist es unerheblich, ob diese Information am Gerät 8b innerhalb eines festgelegten Zeitfensters eintrifft. Für den Austausch dieser Daten wird der konventionelle, vom OPC-UA Standard vorgesehene Datenverarbeitungsweg W1 innerhalb des Kommunikationsprotokolls 11 gewählt. Die TCP/IP-Schnittstelle 15 wird im Gegensatz zum Weg W2 nicht umgangen; die MSRP/SRP-Schnittstelle 18 wird nicht genutzt.

Die AVB-Technologie zeichnet sich durch hohe Bandbreite bei vergleichsweise geringer Taktung aus. In der Automatisierungstechnik ist das Anforderungsprofil jedoch gerade umgekehrt. Da gemäß der OPC-UA Subscriptions nur vergleichsweise geringe Datenmengen zu übertragen sind, ist eine geringere Bandbreite als von AVB üblicherweise zur Verfügung gestellt ausreichend. Dagegen wäre eine höhere Taktung wünschenswert.

Jedoch bietet AVB die Möglichkeit, eine höhere Taktung auf Kosten einer geringeren Bandbreite zu realisieren. Eine höhere Taktung kann zum Beispiel dadurch erreicht werden, dass die Zeit, die benötigt wird, um ein Video Frame zu übertragen (Video Frame Length T, in der Regel 1/25 s bei PAL), aufgeteilt wird in mehrere gleich große Zeitslots 24. Jeder dieser Slots 24 hat dadurch eine entsprechend kleinere Taktzeit bzw. Slot Length t1. Somit wird eine höhere Taktrate erreicht. Natürlich können in jedem dieser Slots 24 auch entsprechend weniger Daten übertragen werden. Dies ist aber in der Automatisierungstechnik kein Problem, da verglichen mit Video Stream Daten erheblich weniger Nutzdaten pro Slot 24 übertragen werden müssen.

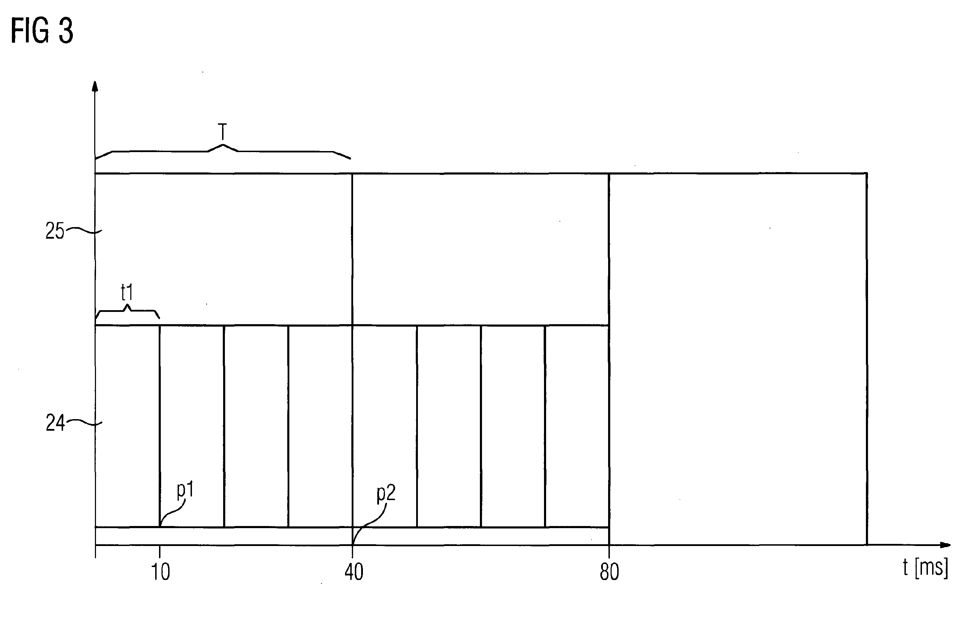

Im Ausführungsbeispiel der FIG 3 wird ein Datenfenster 25 der Länge T=40 ms in vier gleich lange Slots 24 mit Slot Length t1=10 ms unterteilt. Durch die Synchronisierung der Datenfenster 25 bzw. Frames werden diese Slots 24 entsprechend auch nur in dieser Rate (z.B. 1/25 s) synchronisiert (vgl. Sync Point p2). Dies ist jedoch vollkommen ausreichend, da der Jitter bei den einzelnen Slots 24 (Pseudo Sync Point p1) klein genug ist, um innerhalb der Framerate in der Jittertoleranz zu bleiben. Durch die garantierte Bandbreite von AVB ist es möglich, hinsichtlich der Subscriptions bzw. echtzeitrelevanten Daten Slots 24 ungenutzt zu lassen, wenn keine solchen Daten zu übertragen sind (z.B. weil es keine Werteänderung in der Subscription gab). Diese freigewordene Bandbreite wird automatisch von AVB zur Übertragung anderer, nicht echtzeitrelevanter Daten verwendet. Die reservierte Bandbreite bzw. die ungenutzten Slots 24 stehen folglich für anderweitige Kommunikation zwischen den Geräten 8a und 8b zur Verfügung. Man spricht von so genannter "atmender" Kommunikation.

Insgesamt werden innerhalb der Kommunikation auf dem Netzwerk 26 die durch OPC-UA und AVB bereitgestellten Vorteile optimal kombiniert. Das in OPC-UA verwendete Prinzip der Subscriptions garantiert, dass alle relevanten Daten bei gleichzeitig geringer Datenmenge übertragen werden; durch AVB wird andererseits die Echtzeitfähigkeit und intelligente Bandbreitenverwaltung zur Verfügung gestellt. Bandbreitenverwaltung und Echtzeitkommunikation sind damit dezentral verwaltet. Eine zentrale Vorplanung der Kommunikation ist nicht mehr erforderlich. Dennoch steigt die übertragbare Datenmenge insgesamt. Daten für die deterministische und nicht deterministische Kommunikation können von dem Kommunikationsprotokoll sehr gut verarbeitet werden. Daneben ist ein hohes Maß an Interoperabilität auf dem Netzwerk 26 sichergestellt.

## Patentansprüche

1. Verfahren zum Austausch von Daten zwischen zwei Geräten (8, 8a, 8b) eines Netzwerkes (26), welches sich zum Austausch der Daten eines Kommunikationsprotokolls (11) mit einer Schnittstelle (13) nach dem OPC-UA Standard bedient,
wobei das Kommunikationsprotokoll (11) eine Schnittstelle (18) nach dem Stream Reservation Protocol (SRP) Standard oder Multiple Stream Registration Protocol (MSRP) Standard gemäß IEEE 802.1Qat umfasst, so dass die Daten zwischen den zwei Geräten (8, 8a, 8b) über beide Schnittstellen (13, 18) in einer vorgegebenen Zeitspanne austauschbar sind.

2. Verfahren nach Anspruch 1, **dadurch gekennzeichnet, dass** das Kommunikationsprotokoll (11), insbesondere nach dem Open Systems Interconnection Reference Model, mehrschichtig aufgebaut ist, wobei jeder Schicht eine Schnittstelle (13, 15, 16, 17, 18) zugeordnet ist, und wobei für eine erste Art von Daten eine Schichtfolge (12, 13, 15, 16, 17) gemäß dem OPC-UA Standard durchlaufen wird (W1) und für eine zweite Art von Daten beim Durchlauf von der Schichtfolge (12, 13, 15, 16, 17) gemäß dem OPC-UA Standard dergestalt abgewichen wird (W2), dass die SRP- bzw. MSRP-Schnittstelle (18) genutzt wird und die zweite Art von Daten zwischen den zwei Geräten (8, 8a, 8b) in der vorgegebenen Zeitspanne ausgetauscht wird.

3. Verfahren nach Anspruch 2, **dadurch gekennzeichnet, dass** das Kommunikationsprotokoll (11) eine Applikationsschicht (12), eine OPC-UA Schnittstelle (13), eine TCP/IP Schnittstelle (15), eine Ethernet Schnittstelle (16) und eine Physikalische Schnittstelle (17) umfasst, welche für die erste Art von Daten durchlaufen werden (W1), wobei für die zweite Art von Daten zumindest die TCP/IP Schnittstelle (18) umgangen wird (W2).

4. Verfahren nach einem der vorhergehenden Ansprüche, **dadurch gekennzeichnet, dass** ein durch die SRP- bzw. MSRP-Schnittstelle (18) bereitgestelltes Datenfenster (25) in mehrere zeitlich aufeinanderfolgende Teildatenfenster (24) untergliedert wird.

5. Verfahren nach Anspruch 2 und 4 oder nach Anspruch 3 und 4, **dadurch gekennzeichnet, dass** die zweite Art von Daten in Teildatenfenstern (24) übertragen wird, durch welche eine erste Teilmenge von Teildatenfenstern (24) gebildet wird, und eine zweite Teilmenge von Teildatenfenstern (24), welche zur ersten Teilmenge disjunkt ist, für die Übertragung der ersten Art von Daten genutzt wird.

6. Vorrichtung zum Austausch von Daten zwischen zwei Geräten (8, 8a, 8b) eines Netzwerkes (26), welche sich zum Austausch der Daten eines Kommunikationsprotokolls (11) mit einer Schnittstelle (13) nach dem OPC-UA Standard bedient,
wobei das Kommunikationsprotokoll (11) eine Schnittstelle (18) nach dem Stream Reservation Protocol (SRP) Standard oder Multiple Stream Registration Protocol (MSRP) Standard gemäß IEEE 802.1Qat umfasst, so dass die Daten zwischen den zwei Geräten (8, 8a, 8b) über beide Schnittstellen (13, 18) in einer vorgegebenen Zeitspanne austauschbar sind.

7. Netzwerk (26) mit zumindest zwei Geräten (8, 8a, 8b) mit einer Vorrichtung nach Anspruch 6.

## Claims

1. Method for interchanging data between two devices (8, 8a, 8b) of a network (26), which makes use of a communication protocol (11) with an interface (13) in accordance with the OPC-UA standard for interchanging data,
wherein the communication protocol (11) comprises an interface (18) in accordance with the Stream Reservation Protocol (SRP) standard or Multiple Stream Registration Protocol (MSRP) standard according to IEEE 802.1Qat, so the data is able to be interchanged between the two devices (8, 8a, 8b) via both interfaces (13, 18) in a prescribed period of time.

2. Method according to claim 1, **characterised in that** the communication protocol (11), is especially constructed in accordance with the Open Systems Interconnection Reference Model, as a multilayer protocol, wherein each layer is assigned an interface (13, 15, 16, 17, 18), and wherein for a first type of data a layer sequence (12, 13, 15, 16, 17) in accordance with the OPC-UA standard is executed (W1) and for a second type of data, during execution, there is deviation (W2) from the layer sequence (12, 13, 15, 16, 17) in accordance with the OPC-UA standard (W2), such that SRP or MSRP interface (18) is used and the second type of data is interchanged between the two devices (8, 8a, 8b) in the prescribed period of time.

3. Method according to claim 2, **characterised in that** the communication protocol (11) comprises an application layer (12), an OPC-UA interface (13), a TCP/IP interface (15), an Ethernet interface (16) and the physical interface (17) through which the data passes (W1) for the first type of data, wherein at least the TCP/IP interface (18) is bypassed (W2) for the second type of data.

4. Method according to one of the preceding claims, **characterised in that** a data window (25) provided by the SRP or MSRP interface (18) is subdivided into a number of temporally consecutive subdata windows (24).

5. Method according to claim 2 and 4 or according to claim 3 and 4, **characterised in that** the second type of data is transmitted in subdata windows (24), through which a first subset of subdata windows (24) is formed, and a second subset of subdata windows (24), which is disjoint from the first subset, is used for the transmission of the first type of data.

6. Apparatus for interchanging data between two devices (8, 8a, 8b) of a network (26) which, for the interchange of the data makes use of a communication protocol (11) with an interface (13) according to the OPC-UA standard,
wherein the communication protocol (11) comprises an interface (18) in accordance with the Stream Reservation Protocol (SRP) standard or Multiple Stream Registration Protocol (MSRP) standard according to IEEE 802.1Qat, so that the data is able to be interchanged between the two devices (8, 8a, 8b) via both interfaces (13, 18) in a prescribed period of time.

7. Network (26) with a least two devices (8, 8a, 8b) with an apparatus according to claim 6.

## Revendications

1. Procédé pour l'échange de données entre deux appareils (8, 8a, 8b) d'un réseau (26), procédé que l'on utilise pour l'échange des données d'un protocole de communication (11) avec une interface (13) selon la norme OPC-UA, où le protocole de communication (11) comprend une interface (18) selon la norme du protocole de réservation de flux (SRP) ou selon la norme du protocole d'enregistrement multiple de flux (MSRP) conformément à la norme IEEE 802.1Qat, de sorte que les données peuvent être échangées entre les deux appareils (8, 8a, 8b) via les deux interfaces (13, 18), dans un laps de temps prédéfini.

2. Procédé selon la revendication 1, **caractérisé en ce que** le protocole de communication (11), en particulier selon le modèle de référence pour l'interconnexion des systèmes ouverts, est constitué de façon multicouche, où une interface (13, 15, 16, 17, 18) est associée à chaque couche et où, pour un premier type de données, est parcourue (W1) une succession de couches (12, 13, 15, 16, 17) selon la norme OPC-UA et, pour un second type de données, on s'écarte (W2), lors du parcours, de la succession de couches (12, 13, 15, 16, 17) selon la norme OPC-UA, de manière telle que l'interface (18) SRP ou MSRP soit utilisée et que le second type de données soit échangé entre les deux appareils (8, 8a, 8b), dans le laps de temps prédéfini.

3. Procédé selon la revendication 2, **caractérisé en ce que** le protocole de communication (11) comprend une couche d'application (12), une interface (13) OPC-UA, une interface (15) TCP/IP, une interface Ethernet (16) et une interface physique (17), lesquelles sont parcourues (W1) pour le premier type de données où, pour le second type de données, au moins l'interface (18) TCP/IP est contournée (W2).

4. Procédé selon l'une quelconque des revendications précédentes, **caractérisé en ce qu'**une fenêtre de données (25) fournie par l'interface (18) SRP ou MSRP est subdivisée en plusieurs fenêtres de données partielles (24) qui se suivent dans le temps.

5. Procédé selon les revendications 2 et 4 ou selon les revendications 3 et 4, **caractérisé en ce que** le second type de données est transmis dans des fenêtres de données partielles (24) à travers lesquelles sont formées une première quantité partielle de fenêtres de données partielles (24) et une seconde quantité partielle de fenêtres de données partielles (24) qui est séparée de la première quantité partielle et utilisée pour la transmission du premier type de données.

6. Dispositif pour l'échange de données entre deux appareils (8, 8a, 8b) d'un réseau (26), dispositif que l'on utilise pour l'échange des données d'un protocole de communication (11) avec une interface (13) selon la norme OPC-UA, où le protocole de communication (11) comprend une interface (18) selon la norme du protocole de réservation de flux (SRP) ou selon la norme du protocole d'enregistrement multiple de flux (MSRP) conformément à la norme IEEE 802. 1Qat, de sorte que les données peuvent être échangées entre les deux appareils (8, 8a, 8b) via les deux interfaces (13, 18), dans un laps de temps prédéfini.

7. Réseau (26) comprenant au moins deux appareils (8, 8a, 8b) comprenant un dispositif selon la revendication 6.
